# FASCICULE DE BREVET EUROPEEN

(11) **EP 1 709 420 B1**
(45) Date de publication et mention de la délivrance du brevet: **15.06.2016**
(21) Numéro de dépôt: 04816547.6
(22) Date de dépôt: 15.12.2004
(51) Int. Cl.: G01N 1/00, G01N 21/79

(54) **PROCEDE ET SYSTEME D ANALYSE D UN ECHANTILLON LIQUIDE**
VERFAHREN UND SYSTEM ZUR ANALYSE EINER FLÜSSIGKEITSPROBE
METHOD AND SYSTEM FOR ANALYSING A LIQUID SAMPLE

(30) Priorité: 17.12.2003 FR 0351095
(43) Date de publication de la demande: 11.10.2006
(73) Titulaire: Commissariat à l'Énergie Atomique et aux Énergies Alternatives, 75015 Paris (FR)
(72) Inventeur: MAGNALDO, Alastair, F-30330 Connaux (FR); DAVIN, Thierry, F-84840 Lapalud (FR)
(74) Mandataire: Ahner, Philippe
(86) Numéro de dépôt international: PCT/FR2004/050693
(87) Numéro de publication internationale: WO 2005/059519

(56) Documents cités:
- DE-A- 19 736 641
- GB-A- 967 586
- US-A- 4 399 225
- US-A- 5 252 486
- US-A- 5 849 592
- US-A- 6 075 312

## Description

### DOMAINE TECHNIQUE

L'invention concerne un procédé et un système d'analyse d'un échantillon liquide.

Le domaine d'application de cette invention est celui des méthodes d'analyse de liquides. Plus spécifiquement, l'invention s'applique à l'analyse automatisée de liquides en écoulement ou de liquides statiques (échantillons prélevés).

### ETAT DE LA TECHNIQUE ANTERIEURE

L'analyse FIA (« Flow Injection Analysis »), ou analyse par injection d'analyte dans le flux liquide d'un porteur (ou fluide vecteur dans la suite), concerne une famille de techniques analytiques dont l'une est décrite dans le document référencé [1] en fin de description. Un premier principe commun à toutes les méthodes analytiques mises en oeuvre en analyse FIA est la dispersion contrôlée d'un liquide dans un flux de liquide vecteur. La dispersion combine des effets de diffusion et des effets de dilution lors de l'écoulement dans un tuyau de petit diamètre.

Cette dispersion a lieu notamment lorsque une zone restreinte d'un liquide présent dans un tuyau à une concentration donnée est introduite dans un flux de liquide vecteur, grâce à la différence des vitesses d'écoulement entre les bords et le centre du tuyau. En même temps, la diffusion dilue les parties extrêmes de la zone créant ainsi un gradient de concentration, surtout aux extrémités.

La compréhension des phénomènes de dispersion et des réactions chimiques qui s'y rajoutent est encore incomplète. Cependant, la plupart du temps, une compréhension poussée des phénomènes n'est pas nécessaire en vertu d'un second principe commun à toutes les méthodes analytique mises en oeuvre en analyse FIA : la très bonne reproductibilité. En effet, avant la mise en oeuvre de l'analyse FIA, il était souvent nécessaire d'obtenir, dans le procédé analytique, des réactions chimiques complètes afin d'atteindre des reproductibilités comparables. L'analyse FIA ne laisse souvent pas un délai suffisant à des réactions complètes, mais assure un temps de réaction identique et reproductible pour chaque analyse. Ainsi, chaque portion de l'échantillon subit des traitements différents, mais de façon reproductible entre les échantillons. Il s'agit d'une avancée significative dans l'analyse automatisée, notamment du fait de la réduction des temps d'analyse et l'allégement des interventions de l'utilisateur.

Les premières applications de l'analyse FIA utilisent un flux continu dans une seule direction : une zone de l'échantillon est injectée dans le flux continu d'un fluide vecteur. Au cours du temps, le flux continu crée le mélange permettant à la réaction du procédé analytique d'avoir lieu pour engendrer des espèces détectables. Comme illustré sur les figures la et 1b, cette technique nécessite une pompe 10, une valve d'injection à deux voies 11, un détecteur en ligne 12 et une boucle de réaction 13. Cette boucle 13 est constituée du tuyau séparant la valve d'injection 11 du détecteur 12. L'introduction de l'échantillon à analyser se fait par l'entrée E. S représente la sortie des effluents. Le choix des caractéristiques de la boucle (dimensions et forme) dépend du procédé analytique considéré. Le volume mort du détecteur est suffisamment faible pour la résolution demandée. Les caractéristiques de l'écoulement doivent être constantes et reproductibles. Ceci impose souvent un diamètre de tuyau constant. La fréquence analytique est imposée par les caractéristiques de la dispersion : elle est ainsi limitée afin d'éviter toute pollution entre échantillons successifs.

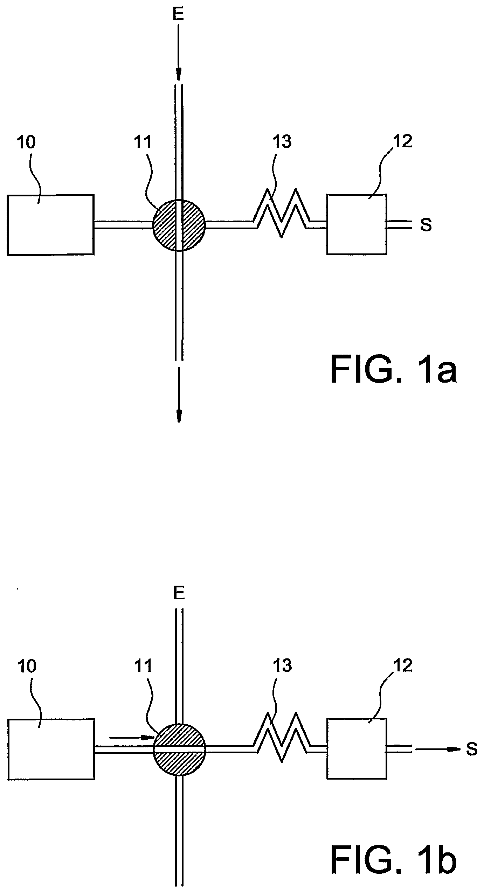

Les figures 1a et 1b représentent une séquence analytique typique. Dans un premier temps illustré sur la figure 1a, l'échantillon est passé dans une boucle d'injection jusqu'à ce que le contenu de la valve d'injection 11 soit représentatif de celui-ci. Comme illustré sur la figure 1b, la valve d'injection 11 est ensuite commutée pour permettre l'injection du contenu de la valve dans le flux de réactif. L'échantillon est ensuite dispersé dans le tuyau 13 par le flux continu pour être détecté dans le détecteur 12 lors de son passage.

Les avantages de la technique d'analyse FIA par rapport aux techniques antérieures sont une plus forte fréquence analytique, une plus faible consommation d'échantillon et une très bonne reproductibilité. Ses désavantages sont une plus grande consommation de réactifs, une plus grande consommation de fluides vecteurs et une forte complexité des séquences pour des procédés nécessitant plusieurs étapes de traitement. Les réactifs supplémentaires nécessaires à la réaction chimique du procédé sont introduits par des jonctions dans le flux de fluide vecteur. Chaque réactif doit ainsi être introduit par une dérivation, et possède donc un élément de pompage qui lui est propre.

L'analyse FIA telle que décrite ci-dessus est largement utilisée en analyse automatisée et contribue à la grande majorité des publications dans le domaine. Une des avancées issue de la technique de l'analyse FIA est l'analyse par injection séquentielle.

L'analyse par injection séquentielle ou analyse SIA (« sequential injection analysis ») et l'analyse FIA ont en commun le principe de dispersion et le maniement des fluides de façon reproductible. L'analyse SIA apporte, en plus, une utilisation d'un flux bidirectionnel et des périodes d'arrêt du fluide. En outre, la valve à deux positions de l'analyse FIA est remplacée par une valve multidirectionnelle. L'analyse SIA peut ainsi analyser des solutions en utilisant des procédés chimiques plus compliqués, tout en conservant des composants technologiques relativement fiables.

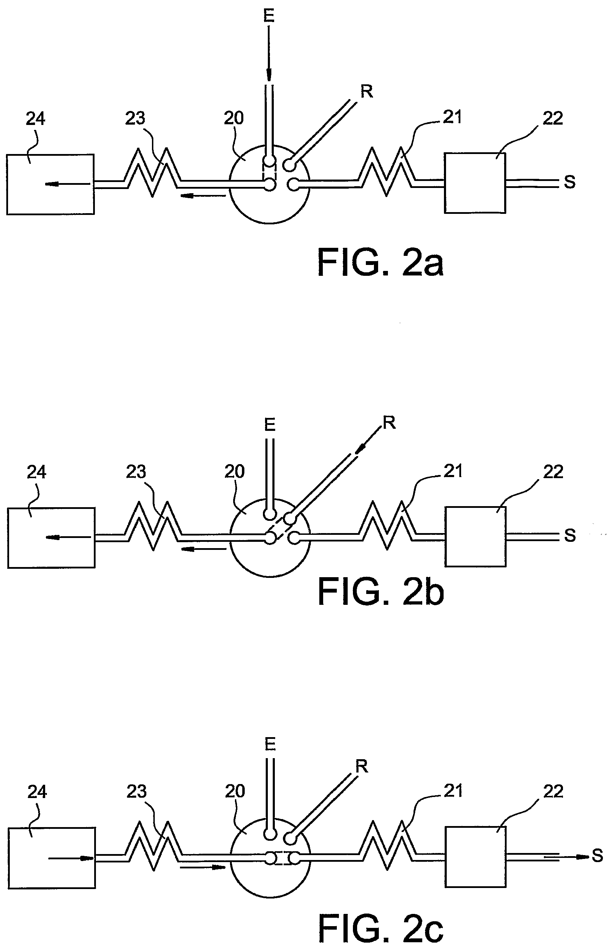

Les figures 2a à 2c, qui illustrent un système classique d'analyse SIA, représentent une valve multidirectionnelle 20, une boucle de mélange 21, et un détecteur 22, une boucle de rétention 23 et une pompe bidirectionnelle 24.

En général l'analyse est effectuée en trois séquences. La première séquence est le remplissage du système par une solution vecteur, par exemple de l'eau désionisée. L'objet de cette séquence est de pourvoir le système d'un vecteur inerte capable de transporter, y compris lors des inversions de flux, les zones de l'échantillon à analyser. La seconde séquence, comme illustrée sur les figures 2a et 2b, est l'aspiration alternée de zones d'échantillon, et du (des) réactif(s) nécessaire(s) R pour le procédé analytique sous la forme d'un train de zones, le tout étant disposé dans la boucle de rétention 23. La troisième séquence, comme illustrée sur la figure 2c, est la dispersion de ce train de zones dans la boucle de mélange 21 suivi du passage devant le détecteur 22. La formation d'un train de zones d'échantillon et de réactifs ne nécessite l'emploi que d'une seule pompe 24, contrairement au cas général de l'analyse FIA. Cependant, elle doit intégrer des contraintes supplémentaires liées au flux bidirectionnel.

Les avantages de l'analyse SIA par rapport à l'analyse FIA sont les suivants : un nombre plus restreint de composantes technologiques permettant l'application de procédés plus compliqués, une plus grande flexibilité apportée par la possibilité d'inversion du flux et une plus grande facilité d'optimisation sans nécessiter de recâblage. Cependant les volumes nécessaires, notamment en fluide vecteur, sont importants : typiquement 10 à 100 fois plus importants que les volumes de réactifs.

Plus récemment, une possibilité d'analyse séquentielle sans solution vecteur a été proposée, l'analyse par CSIA. (« carrier-less sequential injection analysis » ou « analyse par injection séquentielle sans porteur »). L'analyse CSIA, décrite par exemple dans le document référencé [2], inclut les avantages de l'analyse SIA, dont le faible nombre de composantes technologiques, et évite les désavantages potentiels de l'utilisation d'un fluide vecteur qui sont, entre autres, un volume d'effluent analytique élevé lié au facteur de multiplication entre les volumes de réactifs et de solution vecteur.

Un système classique d'analyse CSIA se présente de façon analogue au système illustré sur les figures 2a à 2c. Cependant la séquence analytique est différente. Elle est, en général, effectuée selon les étapes suivantes : la boucle de rétention 23 est remplie d'analyte par aspiration par la pompe 24. Une portion de l'analyte est refoulée en direction de la boucle de mélange 21 et du détecteur 22. L'aspiration de l'analyte est complétée. Ensuite, les réactifs sont aspirés par basculement de la vanne multivoies 20. Un nouveau basculement de cette vanne 20 permet à la pompe 24 de refouler le réactif et l'analyte successivement dans la boucle de mélange 21 et le détecteur 22.

Par rapport à l'analyse SIA, l'élimination du fluide vecteur a pour conséquence l'utilisation d'un volume plus important d'analyte et une rétention dans une boucle suffisamment volumineuse.

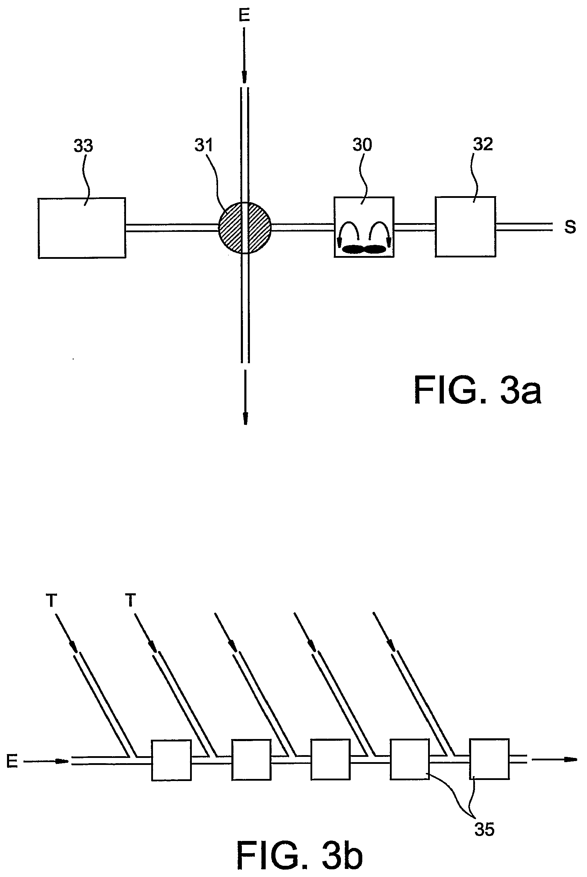

La mise en oeuvre de méthodes analytiques de titrage (ou analyses volumétriques) par ces techniques de dispersion contrôlée nécessite l'emploi de composants techniques additionnels. Comme illustré sur la figure 3a, une solution technique consiste à utiliser une chambre de mélange 30, située entre la zone d'injection 31 et le détecteur 32, la pompe étant référencée 33. Lorsqu'un constituant est ajouté à un autre déjà présent dans la chambre de mélange 30, un gradient de concentration permettant le titrage est obtenu à la sortie de cette chambre 30, avant le passage devant le détecteur 32. Une autre solution consiste à utiliser deux pompes à débits variables de façon suffisamment précise : une pompe délivrant l'analyte, l'autre le titrant. Une boucle de réaction réalise un mélange partiel ou complet des solutions avant le passage devant une cellule de mesure en ligne. Le titrage s'effectue ensuite par l'établissement d'un gradient: le débit (ou la concentration) du titrant (ou de l'analyte) varie de façon continue dans le temps, d'autres propriétés du mélange étant maintenues constantes. Une telle solution, nécessitant des mesures individuelles successives, est consommatrice de temps. Le grand nombre de mesures individuelles n'en fait pas réellement une méthode continue.

Certaines solutions décrivent des techniques de titrage en continu par injection du titrant à des endroits géométriques définis le long d'un capillaire, dans lequel circule en permanence 1'analyte. Comme décrit dans le document référencé [3] et comme illustré sur la figure 3b, l'analyte circulant dans un capilaire entrant en E, reçoit à chaque lieu d'injection un débit de titrant T. Après chaque ajout consécutif et après sa réaction chimique complète, l'état du mélange est mesuré par un détecteur 35. Les ajouts consécutifs sont poursuivis jusqu'à l'épuisement de l'analyte. Une pré-dilution est nécessaire afin d'améliorer la précision.

Les volumes de l'analyte et des effluents liquides peuvent être d'une grande importance, notamment dans le cas de prélèvements pouvant présenter des risques pour l'homme comme les solutions radioactives ou biologiques. Plus généralement, ceci peut être le cas de solutions liquides à analyser issues d'un pré-traitement, par exemple d'une concentration, d'une séparation ou de toutes opérations chimiques ne pouvant être réalisées à plus grande échelle. Ceci peut être également le cas de solutions de toutes sortes issues de dispositifs sub-millimétriques dont des puces microfluidiques.

Pour résumer, souvent les systèmes analytiques par analyse FIA ne peuvent être utilisés à cause de leur grande consommation de liquide vecteur et de réactif. Les systèmes analytiques par analyse SIA et CSIA ne peuvent être utilisés non seulement à cause de leur grande consommation de fluides en général mais aussi à cause de l'importance des volumes et longueurs des boucles de rétention et réaction, difficilement compatibles avec les contraintes exigées par la plupart des méthodes de fabrication des circuits miniaturisés.

De plus les systèmes analytiques par analyse FIA, SIA ou CSIA nécessitent l'utilisation de vannes, ce qui est pénalisant lorsque l'on cherche à miniaturiser l'analyse. En effet, l'installation de vannes dans des circuits micro-fluidiques nécessite une étape technologique supplémentaire non-triviale. Les analyses SIA et CSIA nécessitent l'emploi d'une pompe bi-directionnelle, qui peut poser certains soucis, notamment de dégazage entraînant la formation de bulles de gaz, perturbant grandement la reproductibilité des analyses surtout lorsque l'on cherche à réaliser une miniaturisation. Les analyses FIA, SIA et CSIA nécessitent l'injection d'un échantillon de façon reproductible, notamment en ce qui concerne son volume, ce qui est source de dérives analytiques.

Enfin, lorsque le procédé analytique nécessite des titrages, l'adjonction d'une chambre de mélange est généralement incompatible avec l'objectif fixé de miniaturisation.

L'objet de l'invention est d'apporter une solution technique aux problèmes soulevés ci-dessus, en proposant un procédé analytique automatisable amélioré par l'utilisation de moins de volume de réactifs et d'analyte, en l'absence de fluide vecteur, permettant d'effectuer des analyses volumétriques, notamment sur un flux continu, le tout sur des longueurs et dans des volumes compatibles avec les techniques de fabrication de circuits fluidiques miniaturisés.

Le document référencé [4] décrit un analyseur automatique qui comprend des moyens pour alimenter un flux d'un échantillon à travers un premier capillaire de mesure, des moyens pour alimenter un flux de réactif à travers un second capillaire de mesure dans le flux d'échantillon en utilisant une vanne, des moyens pour détecter une réaction dans le flux du mélange échantillon et réactif, et qui comprend un colorimètre formé d'une cellule transparente et d'une chambre transparente entourant cette cellule.

Cet analyseur présente les caractéristiques suivantes :
- il fonctionne à flux continu à la fois d'échantillon et de réactif,
- il utilise un colorimètre pour détecter une réaction entre l'échantillon et le réactif qui produise une couleur associée à une cellule transparente verticale,
- le colorimètre comprend de nombreux éléments qui permettent de sélectionner la couleur dont la lumière est plus absorbée.

### EXPOSÉ DE L'INVENTION

L'invention concerne un procédé d'analyse d'un échantillon liquide par injection de celui-ci dans une boucle de réaction couplée à des moyens d'éclairage et à des moyens de détection, qui comprend les étapes suivantes :
- remplissage d'une boucle de réaction par un volume minimal de l'échantillon à analyser via l'une des branches d'entrée d'un embranchement en forme de T et de sa sortie, ces moyens de détection étant couplés à cette boucle de réaction,
- injection d'au moins un volume fixe d'au moins un réactif dans la boucle de réaction via l'autre branche d'entrée de l'embranchement en forme de T et de sa sortie,

- détection de niveaux de lumière filtrée à l'aide de ces moyens de détection, ces niveaux étant représentatifs des caractéristiques de l'échantillon mises en évidence par le mélange de celui-ci avec le au moins un réactif,
- évacuation des réactifs situés dans la boucle de réaction, caractérisé en ce que la boucle est un tuyau transparent, en ce que la lumière est filtrée et en ce que l'on utilise un capteur ponctuel apte à se déplacer le long de la boucle de réaction.

Avantageusement on détecte un gradient de concentration dans la boucle de réaction. La boucle de réaction peut être un capilaire transparent ou un canal microfluidique. L'évacuation des réactifs situés dans la boucle de réaction peut être effectuée à l'aide de l'échantillon restant. Elle peut, également être effectuée à l'aide de l'échantillon suivant.

Avantageusement le flux d'échantillon n'est pas interrompu ce qui permet une analyse en continu. On peut injecter successivement des volumes fixes de réactifs pendant des intervalles de temps pré-définis. On peut ainsi réaliser une série de poussées de réactif à des débits de l'ordre de 10 à 1000 *u*L.min-¹ suivis d'un temps d'attente. On peut réaliser une détection linéaire le long de la boucle de réaction ce qui permet d'obtenir un relevé spatial et temporel des réactions dans l'ensemble boucle de réaction + moyens de détection. On peut également réaliser une détection ponctuelle en un endroit de la boucle de réaction ce qui permet d'obtenir un relevé temporel des réactions en un endroit de l'ensemble boucle de réaction + moyens de détection.

L'invention concerne également un système d'analyse d'un échantillon liquide comprenant une boucle de réaction entre cet échantillon introduit par une entrée E reliée à une branche d'entrée d'un embranchement en forme de T et au moins un réactif, et des moyens de détection, dans lequel la boucle de réaction est constituée d'un tuyau transparent, et dans lequel ledit système comprend un pousse-seringue relié à l'autre branche d'entrée de l'embranchement en forme de T dont la sortie est reliée à la boucle de réaction permettant de délivrer dans cette boucle des doses de cet au moins un réactif, et des moyens d'éclairage permettant d'éclairer cette boucle de réaction de manière à ce que les moyens de détection enregistrent des niveaux de lumière transmise par ladite boucle, ces niveaux étant représentatifs des caractéristiques de l'échantillon mises en évidence par le mélange de celui-ci avec le au moins un réactif,
caractérisé en ce que la boucle de réaction forme un tuyau transparent, en ce que les moyens de détection enregistrent des niveaux de lumière transmise après filtrage, et en ce que les moyens de détection comprennent un capteur ponctuel apte à se déplacer le long de la boucle de réaction.

Le tuyau transparent peut être un capilaire transparent ou un canal micro-fluidique. Les moyens de détection peuvent comprendre une barrette de diodes ou deux fibres optiques disposées de part et d'autre de la boucle de réaction. Avantageusement une pompe péristaltique permet l'introduction de l'échantillon. Avantageusement une micro-vanne peut être disposée en amont de l'introduction de l'échantillon dans la boucle de réaction. Un embranchement en forme de T est relié respectivement à l'entrée E d'échantillon, au pousse-seringue, et à la boucle de réaction.

Avantageusement l'invention décrit une technique d'analyse qui ne nécessite ni fluide vecteur, ni de boucle de rétention, ni forcément une vanne, ni forcément une pompe bidirectionnelle. La boucle de réaction est également réduite en volume. Ce procédé ne nécessite pas de connaître ou de mesurer le volume de l'échantillon. Son débit est également sans conséquence sur la mesure: l'échantillon peut être introduit au coup par coup de façon aléatoire en débit, en continu et/ou de façon gravitaire ou par capillarité. Ce procédé permet également un titrage de solution en continu et en ligne, mais aussi de façon discontinue, avec une injection de réactifs à un seul débit.

Lors d'une analyse, l'échantillon peut être introduit directement dans le dispositif, par une pompe ou un écoulement gravitaire. Il n'est besoin ni de connaître le volume de l'échantillon, ni de contrôler rigoureusement sa vitesse d'écoulement. La boucle de réaction et la zone de détection peuvent ainsi être des zones d'écoulement continu de l'analyte. Lorsque l'on désire procéder à une analyse, le flux d'analyte peut éventuellement être arrêté par une vanne simple. Le volume fixe de réactif, parfaitement contrôlé, peut être introduit à une vitesse donnée de telle sorte qu'un gradient de concentration du réactif dans l'analyte est établi. Un temps d'attente est souvent souhaitable afin que la diffusion homogénéise au moins partiellement la solution selon la section du canal. Il est possible d'injecter de cette façon, suivant des chronologies et volumes bien établis, l'un après l'autre, d'autres réactifs ou de nouveau le réactif initial, ce qui permet de présenter au niveau du détecteur non seulement un mélange reproductible des différents réactifs, mais des gradients de mélange de l'analyte dans les réactifs. Il est aussi possible par activation précise de la pompe à des débits faibles, de faire passer devant un détecteur ponctuel, de façon continue dans le temps, le gradient de mélange établi dans la boucle de réaction. Le résultat peut être alors exprimé par le laps de temps nécessaire pour que le détecteur fournisse une valeur fixée à l'avance. L'ensemble de détecteurs en ligne peut être, par exemple, un ensemble de conductimètres, potentiomètres ou un capteur CCD linéaire, qui fournissent par exemple une position correspondant à la détection d'un niveau donné d'un paramètre, par exemple celle correspondant à la neutralisation d'un acide par une base, ce qui permet d'obtenir, par un calibrage préalable à la teneur d'un élément à analyser. Le capteur ponctuel peut aussi être mobile le long de la boucle de réaction, par exemple un ensemble de fibres optiques montées sur un moteur pas à pas.

### BRÈVE DESCRIPTION DES DESSINS

Les figures 1a et 1b illustrent une technique analytique typique par analyse FIA.
Les figures 2a à 2c illustrent une technique analytique typique par analyse SIA.
La figure 3a illustre une technique analytique permettant un titrage par obtention, dans le temps, d'un gradient de concentration.
La figure 3b illustre une technique analytique permettant un titrage continu.
Les figures 4a et 4b illustrent un premier exemple de mise en oeuvre du procédé de l'invention.
Les figures 5a et 5b illustrent un second exemple de mise en oeuvre du procédé de l'invention.
La figure 6a illustre une réponse typique d'une barrette à diodes lors d'un dosage suivant la technique décrite dans le second exemple.
La figure 6b illustre une courbe typique obtenue par la technique décrite dans le second exemple, représentant la position du virement de couleur du colorant en fonction de l'acidité sans charge de l'analyte.
Les figures 7a et 7b illustrent un troisième exemple de mise en oeuvre du procédé de l'invention.

### EXPOSÉ DÉTAILLÉ DE MODES DE RÉALISATION PARTICULIERS

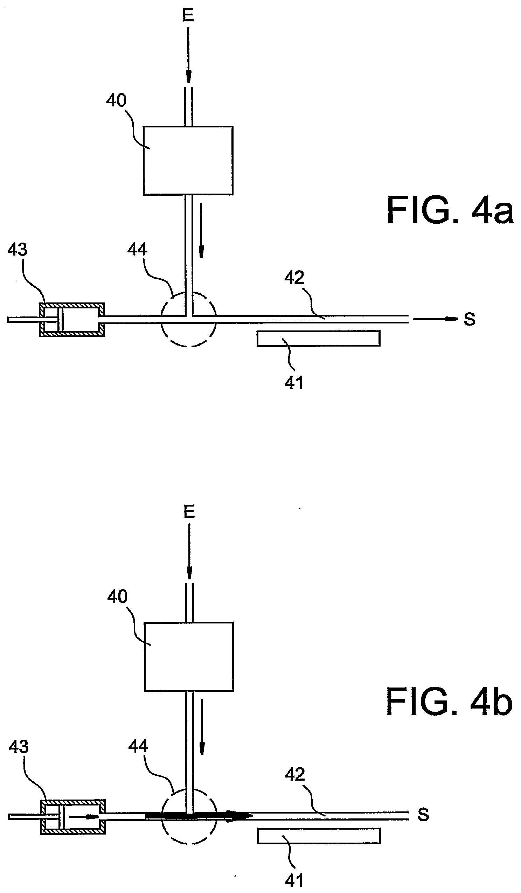

Comme illustré par exemple sur la figure 4a, la présente invention concerne un système d'analyse d'un échantillon liquide comprenant une boucle de réaction 42, qui est constituée d'un tuyau transparent, par exemple un capilaire transparent ou d'un canal micro-fluidique, entre cet échantillon entré en E et au moins un réactif. Un pousse-seringue 43, dont la sortie est reliée à la boucle de réaction 42, permet de délivrer des doses de cet au moins un réactif dans la boucle de réaction. Un embranchement 44 en forme de « T » permet l'introduction de l'échantillon et du (ou des) réactif (s) dans la boucle de réaction 42. Des moyens d'éclairage, par exemple une diode électroluminescente, permettent d'éclairer la boucle de réaction 42 de manière à ce que des moyens de détection 41, par exemple une barrette de diodes, enregistrent des niveaux de lumière transmise par ladite boucle après filtrage, ces niveaux étant représentatifs de caractéristiques de l'échantillon mises en évidence par le mélange de celui-ci avec le (ou les) réactif(s).

Le procédé de l'invention comprend les étapes suivantes :
- remplissage de la boucle de réaction 42 par un volume minimal de l'échantillon à analyser,
- injection d'un volume fixe d'au moins un réactif dans la boucle de réaction 42,
- détection de niveaux de lumière filtrée à l'aide des moyens de détection 41,
- évacuation des réactifs situés dans la boucle de réaction 42.

On va, à présent, étudier trois exemples de réalisations selon l'invention.

### Premier exemple : dosage acido-basique

Dans ce premier exemple, comme illustré sur les figures 4a et 4b, l'échantillon est introduit par une pompe péristaltique 40. Le détecteur 41 est une barrette à diodes alignée sur la boucle à réaction 42, qui est dans cet exemple un capilaire transparent, mais peut être aussi un canal microfluidique. Un colorant, le bleu de bromothymol (BBT) est dilué dans une base (NaOH) contenue dans la seringue d'un pousse-seringue 43.

Le pousse-seringue 43, muni d'une seringue de typiquement 100 à 500 µL, est capable de délivrer des doses de l'ordre de 1 µL de façon suffisamment précise. La seringue est couplée en sortie au capillaire 42. L'échantillon issu de la pompe péristaltique 40 rencontre en un embranchement en forme de T 44 le capillaire 42 fixé en sortie du pousse-seringue 43. Cet embranchement 44 est réalisé par les techniques de fabrication microfluidiques. Le capillaire 42 en sortie de l'embranchement T 44, constituant la boucle de réaction des méthodes analytiques FIA et SIA, possède un diamètre intérieur de 100 à 500 µm. Sa longueur est de 0,5 à 10cm.

La barrette à diodes 41 est éclairée par un une diode électro-luminescente, non représentée sur les figures 4a et 4b. Un filtre, non représenté, permet de distinguer clairement la coloration bleue du BBT en milieu plus basique de sa coloration jaune en milieu plus acide.

L'échantillon, dont le débit est quelconque, est entré en E et circule à travers l'embranchement 44, le capillaire 42 jusqu'à la sortie S. Le débit d'échantillon, issu d'un procédé chimique en aval de la zone de prélèvement, est de 0,5 uL.min⁻¹. Au moment ou l'on désire obtenir un dosage de l'acidité, le pousse-seringue 43 est activé à un débit de l'ordre de 10 à 1000 µL.min⁻¹, délivrant une quantité variable mais répétable de colorant, typiquement de l'ordre de 0,5 à 10 µL. Il s'établit ainsi un gradient de concentration dans le capillaire 42 établissant une zone à coloration bleue plus basique, et une zone à coloration jaune plus acide. La barrette à diodes 41 enregistre les niveaux de lumière filtrée donnant ainsi des renseignements sur la portion de capillaire 42 en face de chaque diode pour un temps donné après l'arrêt du mouvement du pousse-seringue 43. Le flux d'échantillon peut être arrêté ou non pendant l'analyse. Dans cet exemple celui-ci est maintenu. Les mesures issues de la barrette 41 le long du capillaire 42, sont suivies dans le temps. Après un étalonnage de la réponse pour chaque élément, il est possible de donner une valeur de l'acidité de l'échantillon.

Les réactifs situés dans le capillaire 42 sont ensuite évacués par l'écoulement de l'échantillon. Un volume d'échantillon suffisant, typiquement 5 uL ou plusieurs fois le volume de la boucle de réaction 42, est nécessaire afin d'éviter un croisement trop important entre deux séquences analytiques de mesure.

### Second exemple: dosage de l'acidité libre dans un milieu chargé

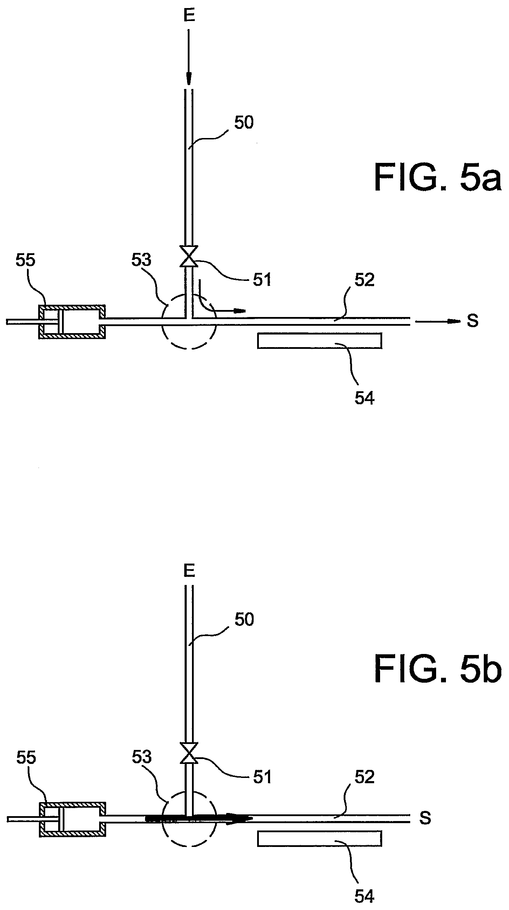

Dans cet exemple, comme illustré sur les figures 5a et 5b, la méthode analytique utilisée est celle du dosage de solutions chargées par la méthode à l'oxalate.

L'écoulement de la solution d'échantillon se fait de manière gravitaire et capillaire. Un échantillon de quelques dizaines de microlitres est présenté à l'embouchure E d'un capillaire 50 en amont d'une vanne 51 à l'aide d'un entonnoir ou de tout autre dispositif permettant le remplissage correct par capillarité et/ou gravitaire sur un faible volume. Le volume du capillaire 50 en amont de la vanne 51 est d'environ 10 fois supérieur à celui de la boucle de réaction 52. La vanne 51, de préférence une micro-vanne, dont le volume mort est très inférieur au volume de l'échantillon situé en amont d'un embranchement en forme de T 53, permet d'arrêter l'écoulement de l'échantillon ou l'écoulement d'air lorsque l'échantillon est épuisé en amont de la vanne 51. La configuration des autres éléments est identique au premier exemple décrit ci-dessus, si ce n'est l'adaptation des filtres utilisés au colorant considéré. Les réactifs sont de la soude, un colorant virant vers pH 5,5 et un complexant, l'oxalate. Ce procédé se distingue de l'exemple précédent par la présence de plusieurs réactifs et par le fait que l'échantillon doit être dilué dans le réactif d'un facteur compris entre 20 et 500, afin de permettre la complexation suffisante de la charge.

Le débit de l'échantillon à travers l'embranchement 53, le capillaire 52 et le détecteur 54 est quelconque. Il peut être discontinu. Il est fixé par la configuration de l'ensemble.

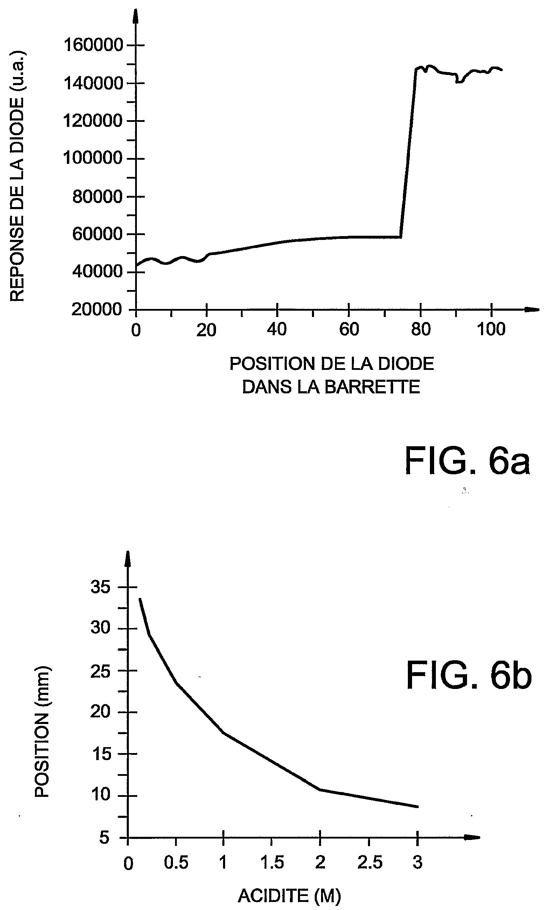

Au moment où l'on désire effectuer le dosage de l'acidité libre, la vanne 51 est fermée pour éviter toute remontée de réactifs. Une première poussée du pousse-seringue 55, activé à un débit de 10 à 1000 µL.min-¹, délivre une quantité fixée à l'avance et rëpétable, typiquement de l'ordre de 0,5 à 10 µL. Un certain moment d'attente est nécessaire, typiquement de l'ordre de 10 secondes, afin d'homogénéiser très partiellement le mélange en fonction de la section du capillaire 52. Une seconde poussée identique de réactifs dilue de nouveau l'échantillon. D'autres combinaisons poussée/temps d'attente peuvent avoir lieu ensuite pour tenir compte des acidités à analyser. Comme dans le premier exemple, un gradient de concentration est établi le long du capillaire 52. Son suivi dans le temps permet de calculer la valeur de l'acidité. La figure 6a représente un relevé typique de valeurs mesurées sur la barrette à diodes en fonction de la position de la diode dans la barrette 54 et donc sur le capilaire 52. La figure 6b représente une courbe de réponse typique de la position du point de virage de la coloration dans le capillaire 52 en fonction de l'acidité de l'analyte, en tenant compte de la dispersion des résultats sur 10 mesures faites dans un intervalle de temps de une semaine entre la première mesure et la dernière mesure.

Les réactifs situés dans le capillaire 52 sont ensuite évacués par l'écoulement de l'échantillon restant, par l'écoulement des bulles de gaz séparant les échantillons et par l'écoulement d'une portion de l'échantillon suivant. Le volume total de réactifs et échantillon consommé est de l'ordre de 3 à 15 µL.

### Troisième exemple : dosage d'une espèce réagissant à un colorant spécifique, par exemple l'hydrazine en solution nitrique

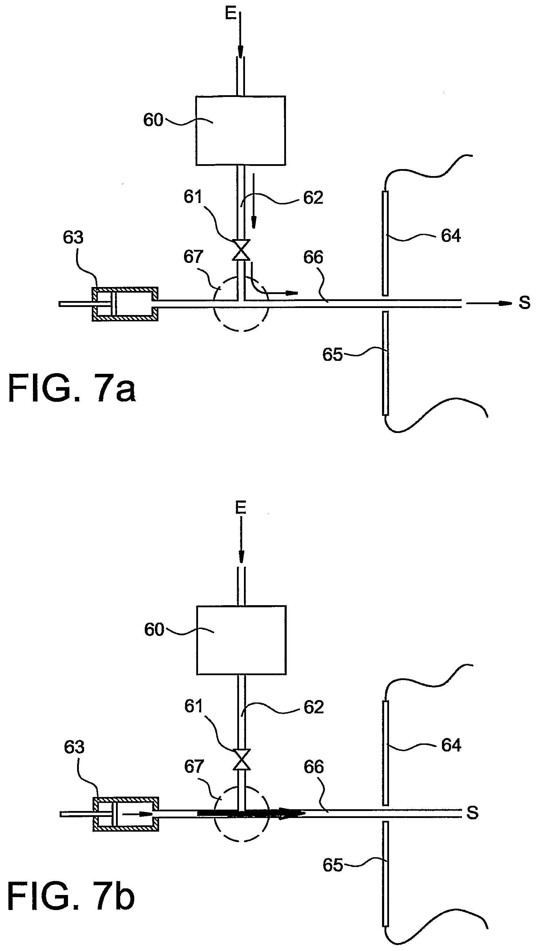

Cet exemple, comme illustré sur les figures 7a et 7b, décrit le dosage de l'hydrazine en milieu nitrique par le DMAB (diméthylaminobenzaldéhyde) de manière à mesurer des concentrations en hydrazine en solution acide sur trois décades de l'ordre de 0,001 à 1 M. Cet exemple peut également être utilisé pour le dosages d'une espèce en solution par un réactif lorsque des dilutions de l'ordre de 10 à 10000 sont nécessaires.

L'échantillon d'hydrazine est introduit par une pompe péristaltique 60 avec un débit de 100 µL.min⁻¹. Une vanne 61 est nécessaire pour isoler la partie en amont de celle-ci 61 de l'embranchement en forme de T 67, relié d'une part au pousse-seringue 63 et d'autre part au capilaire 66. En effet, en l'absence d'une telle vanne 60, lors d'une l'introduction de réactif, la tuyauterie souple 62 pourrait se dilater sous les à coups de pression délivrés par le pousse-seringue 63. Cet effet se traduirait par une moins bonne reproductibilité des mesures pour des intervalles de temps supérieurs à une journée. Le détecteur est un capteur ponctuel, constitué de deux fibres optiques 64 et 65 en regard à travers le capillaire 66, reliées à un spectrophotomètre et une source de lumière. Le réactif est une solution de DMAB à environ 0,1 M dans de l'acide nitrique 0,5 M.

Lorsque l'on souhaite effectuer une analyse, la pompe péristaltique 60 est arrêtée, et la vanne 61 fermée. Comme dans le second exemple, on effectue, à l'aide du pousse-seringue 63, une série de poussées du réactif à des débits de l'ordre de 10 à 1000 µL.min-¹ suivis d'un temps d'attente. Une mesure par spectrophotométrie permet de contrôler l'absorbance afin de décider si une nouvelle poussée de réactifs est nécessaire. Une fois le nombre de poussées nécessaire obtenu, l'absorbance en un point du capilaire 66 est mesurée en fonction temps écoulé depuis l'arrêt de la dernière poussée. Un calibrage préalable permet de donner une valeur de la concentration en hydrazine.

### REFERENCES

[1] US 4 315 754
[2] US 5 849 592
[3] US 2003/032195
[4] GB 967 586

## Revendications

1. Procédé d'analyse d'un échantillon liquide par injection de celui-ci dans une boucle de réaction couplée à des moyens d'éclairage et à des moyens de détection, qui comprend les étapes suivantes :
- remplissage d'une boucle de réaction (42, 52, 66) par un volume minimal de l'échantillon à analyser via l'une des branches d'entrée d'un embranchement en forme de T (44, 53, 67) et de sa sortie, ces moyens de détection étant couplés à cette boucle de réaction,
- injection d'au moins un volume fixe d'au moins un réactif dans la boucle de réaction (42, 52, 66) via l'autre branche d'entrée de l'embranchement en forme de T (44, 53, 67) et de sa sortie,
- détection de niveaux de lumière filtrée à l'aide de ces moyens de détection (41), ces niveaux étant représentatifs des caractéristiques de l'échantillon mises en évidence par le mélange de celui-ci avec le au moins un réactif,
- évacuation des réactifs situés dans la boucle de réaction,
**caractérisé en ce que** la boucle est un tuyau transparent, **en ce que** la lumière est filtrée et **en ce que** l'on utilise un capteur ponctuel apte à se déplacer le long de la boucle de réaction.

2. Procédé selon la revendication 1, dans lequel on détecte un gradient de concentration dans la boucle de réaction (42, 52, 66).

3. Procédé selon la revendication 1, dans lequel la boucle de réaction (42, 52, 66) est un capilaire transparent ou un canal microfluidique.

4. Procédé selon la revendication 1, dans lequel l'évacuation des réactifs situés dans la boucle de réaction (42, 52, 66) est effectuée à l'aide de l'échantillon restant.

5. Procédé selon la revendication 1, dans lequel l'évacuation des réactifs situés dans la boucle de réaction (42, 52, 66) est effectuée à l'aide de l'échantillon suivant.

6. Procédé selon la revendication 1, dans lequel le flux d'échantillon n'est pas interrompu ce qui permet une analyse en continu.

7. Procédé selon la revendication 1, dans lequel on injecte successivement des volumes fixes de réactifs pendant des intervalles de temps pré-définis.

8. Procédé selon la revendication 7, dans lequel on réalise une série de poussées de réactif à des débits de l'ordre de 10 à 1000 µL.min-¹ suivis d'un temps d'attente.

9. Procédé selon la revendication 1, dans lequel on réalise une détection linéaire le long de la boucle de réaction (42, 52, 66) ce qui permet d'obtenir un relevé spatial et temporel des réactions dans l'ensemble boucle de réaction + moyens de détection.

10. Procédé selon la revendication 1, dans lequel on réalise une détection ponctuelle en un endroit de la boucle de réaction (42, 52, 66) ce qui permet d'obtenir un relevé temporel des réactions en un endroit de l'ensemble boucle de réaction + moyens de détection.

11. Système d'analyse d'un échantillon liquide comprenant une boucle de réaction entre cet échantillon introduit par une entrée (E) reliée à une branche d'entrée d'un embranchement en forme de T (44, 53, 67) et au moins un réactif, et des moyens de détection, dans lequel la boucle de réaction est constituée d'un tuyau (42 ; 52 ; 66), et dans lequel ledit système comprend un pousse-seringue (43 ; 55 ; 63) relié à l'autre branche d'entrée d' embranchement en forme de T (44, 53, 67), dont la sortie est reliée à la boucle de réaction, permettant de délivrer dans cette boucle des doses de cet au moins un réactif, et des moyens d'éclairage permettant d'éclairer cette boucle de réaction de manière à ce que les moyens de détection enregistrent des niveaux de lumière transmise par ladite boucle, ces niveaux étant représentatifs des caractéristiques de l'échantillon mises en évidence par le mélange de celui-ci avec le au moins un réactif, **caractérisé en ce que** la boucle de réaction forme un tuyau transparent (42 ; 52 ; 66), **en ce que** les moyens de détection enregistrent des niveaux de lumière transmise après filtrage, et **en ce que** les moyens de détection comprennent un capteur ponctuel apte à se déplacer le long de la boucle de réaction.

12. Système selon la revendication 11, dans laquelle le tuyau transparent est un capilaire transparent ou un canal micro-fluidique.

13. Système selon la revendication 11, dans lequel les moyens de détection comprennent une barrette de diodes (41 ; 54).

14. Système selon la revendication 11, dans lequel les moyens de détection comprennent deux fibres optiques (64 ; 65) disposées de part et d'autre de la boucle de réaction.

15. Système selon la revendication 11 comprenant une pompe péristaltique (40 ; 60) permettant l'introduction de l'échantillon.

16. Système selon la revendication 11 comprenant une micro-vanne (51 ; 61) disposée en amont de l'introduction de l'échantillon dans la boucle de réaction.

## Patentansprüche

1. Verfahren zur Analyse einer flüssigen Probe durch Injektion derselben in eine Reaktionsschleife, die mit Beleuchtungsmitteln und mit Erfassungsmitteln gekoppelt ist, das die folgenden Schritte umfasst:
- Füllen einer Reaktionsschleife (42, 52, 66) mit einem minimalen Volumen der zu analysierenden Probe über einen der Eingangszweige einer Verzweigung in T-Form (44, 53, 67) und des Ausgangs davon, wobei diese Erfassungsmittel mit dieser Reaktionsschleife gekoppelt sind,
- Injizieren wenigstens eines festen Volumens wenigstens eines Reagenz in die Reaktionsschleife (42, 52, 66) über den anderen Eingangszweig der Verzweigung in T-Form (44, 53, 67) und des Ausgangs davon,
- Erfassen von Niveaus von gefiltertem Licht mit Hilfe dieser Erfassungsmittel (41), wobei diese Niveaus repräsentativ sind für Eigenschaften der Probe, die ihre Mischung mit dem wenigstens einen Reagenz zeigt,
- Abführen der in der Reaktionsschleife befindlichen Reagenzien,
**dadurch gekennzeichnet, dass** die Schleife ein transparentes Rohr ist, dass das Licht gefiltert ist, und dass man einen Punktsensor verwendet, der für eine Verlagerung entlang der Reaktionsschleife ausgelegt ist.

2. Verfahren nach Anspruch 1, bei dem man einen Konzentrationsgradienten in der Reaktionsschleife (42, 52, 66) erfasst.

3. Verfahren nach Anspruch 1, bei dem die Reaktionsschleife (42, 52, 66) eine transparente Kapillare oder ein Mikrofluidkanal ist.

4. Verfahren nach Anspruch 1, bei dem das Abführen der in der Reaktionsschleife (42, 52, 66) befindlichen Reagenzien mit Hilfe von verbleibender Probe erfolgt.

5. Verfahren nach Anspruch 1, bei dem das Abführen der in der Reaktionsschleife (42, 52, 66) befindlichen Reagenzien mit Hilfe der nächsten Probe erfolgt.

6. Verfahren nach Anspruch 1, bei dem der Probenstrom nicht unterbrochen wird, was eine kontinuierliche Analyse erlaubt.

7. Verfahren nach Anspruch 1, bei dem man sukzessive feste Volumina von Reagenzien während vordefinierten Zeitintervallen injiziert.

8. Verfahren nach Anspruch 7, bei dem man eine Serie von Schüben von Reagenzien mit Raten in der Größenordnung von 10 bis 1000 µL.min⁻¹ realisiert, gefolgt von einer Wartezeit.

9. Verfahren nach Anspruch 1, bei dem man eine lineare Erfassung entlang der Reaktionsschleife (42, 52, 66) realisiert, was es erlaubt, eine räumliche und zeitliche Aufnahme der Reaktionen in der Gesamtanordnung aus Reaktionsschleife + Erfassungsmitteln zu erzielen.

10. Verfahren nach Anspruch 1, bei dem man eine punktförmige Erfassung an einer Stelle der Reaktionsschleife (42, 52, 66) realisiert, was es erlaubt, eine zeitliche Aufnahme der Reaktionen an einer Stelle der Gesamtanordnung aus Reaktionsschleife + Erfassungsmitteln zu erzielen.

11. System zur Analyse einer flüssigen Probe, umfassend eine Schleife für eine Reaktion zwischen dieser Probe, die eingeführt wird durch einen Eingang (E), welcher mit einem Eingangszweig einer Verzweigung in T-Form (44, 53, 67) verbunden ist, und wenigstens einem Reagenz, sowie Erfassungsmittel, wobei die Reaktionsschleife durch ein Rohr (42; 52; 66) gebildet ist, und wobei das System eine Spritzenpumpe (43; 55; 63) umfasst, die mit dem anderen Eingangszweig der Verzweigung in T-Form (44, 53, 67) verbunden ist, deren Ausgang mit der Reaktionsschleife verbunden ist, was es ermöglicht, in diese Schleife Dosen dieses wenigstens einen Reagenz zuzuführen, sowie Beleuchtungsmittel, die eine Beleuchtung dieser Reaktionsschleife derart ermöglichen, dass die Erfassungsmittel Niveaus von Licht aufzeichnen, das durch die Schleife transmittiert wird, wobei diese Niveaus repräsentativ sind für Eigenschaften der Probe, die ihre Mischung mit dem wenigstens einen Reagenz zeigt, **dadurch gekennzeichnet, dass** die Reaktionsschleife ein transparentes Rohr (42; 52; 66) bildet, dass die Erfassungsmittel Niveaus von transmittiertem Licht nach einer Filterung aufzeichnen, und dass die Erfassungsmittel einen Punktsensor umfassen, der für eine Verlagerung entlang der Reaktionsschleife ausgelegt ist.

12. System nach Anspruch 11, bei dem das transparente Rohr eine transparente Kapillare oder ein Mikrofluidkanal ist.

13. System nach Anspruch 11, bei dem die Erfassungsmittel eine Diodenleiste (41; 54) umfassen.

14. System nach Anspruch 11, bei dem die Erfassungsmittel zwei optische Fasern (64; 65) umfassen, die auf beiden Seiten der Reaktionsschleife angeordnet sind.

15. System nach Anspruch 11, umfassend eine Peristaltikpumpe (40; 60), die das Einführen der Probe ermöglicht.

16. System nach Anspruch 11, umfassend ein Mikroventil (51; 61), das stromaufwärts der Einführung der Probe in die Reaktionsschleife angeordnet ist.

## Claims

1. A method for analyzing a liquid sample by injecting the latter in a reaction loop coupled with illumination means and detection means, said method comprising the following steps :
- filing a reaction loop (42; 52; 66) with a minimum volume of the sample to be analyzed, through a first input of a T-shaped branch (44; 53; 67) and its output, said detection means being connected to said reaction loop,
- injecting at least one fixed volume of at least one reagent into the reaction loop (42; 52; 66) via the second input of the T-shaped branch (44; 53; 67) and its output
- detecting levels of light filtered through said detection means (41), these levels being representative of the characteristics of the sample, revealed by the mixing of this sample with the at least one reagent,
- discharging the reagents located in the reaction loop,
**characterized in that** the loop is a transparent pipe, **in that** the light is filtered, and **in that** a point sensor movable along the reaction loop is used.

2. The method according to claim 1, wherein a concentration gradient is detected in the reaction loop (42; 52; 66).

3. The method according to claim 1, wherein the reaction loop (42; 52; 66) is a transparent capillary or a microfluidic channel.

4. The method according to claim 1, wherein the discharge of the reagents located in the reaction loop (42; 52; 66) is performed by means of the remaining sample.

5. The method according to claim 1, wherein the discharge of the reagents located in the reaction loop (42, 52, 66) is performed by means of the next sample.

6. The method according to claim 1, wherein the sample flux is not interrupted, which allows continuous analysis.

7. The method according to claim 1, wherein fixed volumes of reagents are successively injected during predefined time intervals.

8. The method according to claim 7, wherein a series of pulses of reagents is produced at flow rates of the order to 10 to 1,000 µL min-¹ followed by a waiting time.

9. The method according to claim 1, wherein linear detection is performed along the reaction loop (42; 52; 66) so that it is possible to obtain a space and time plot of the reactions in the set: reaction loop and detection means.

10. The method according to claim 1, wherein a point detection is achieved in a location of the reaction loop (42; 52; 66) so that it is possible to obtain a time plot of the reactions in a location of the set : reaction loop and detection means.

11. A system for analyzing a liquid sample comprising a reaction loop between the sample introduced through a first input (E) linked to an input branch of a T-shaped branch (44; 53; 67) and at least one reagent, and detection means, wherein the reaction loop (42; 52; 66) consists of a pipe (42; 52; 66), and wherein the system comprises a push-syringe (43; 55; 63) linked to the second input of the T-shaped branch (44; 53; 67), whose the output is linked to the reaction loop, allowing doses of said at least one reagent to be delivered into this loop, and illumination means with which this reaction loop may be illuminated so that the detection means record levels of light transmitted through said loop, these levels being representative of the characteristics of the sample revealed by the mixture of the sample with the at least one reagent, **characterized in that** the reaction loop forms a transparent pipe (42; 52; 66), **in that** the detection means record levels of light transmitted through said loop after filtering, and **in that** the detection means comprise a point sensor movable along the reaction loop.

12. The system according to claim 11, wherein the transparent pipe is a transparent capillary or a microfluidic channel.

13. The system according to claim 11, wherein the detection means comprise a diode array (41; 54).

14. The system according to claim 11, wherein the detection means comprise two optical fibers (64; 65) positioned on either side of the reaction loop.

15. The system according to claim 11, comprising a peristaltic pump (40; 60) allowing introduction of the sample.

16. The system according to claim 11, comprising a microvalve (51; 61) positioned upstream from the point of introduction of the sample into the reaction loop.
